# FASCICULE DE BREVET EUROPEEN

(11) **EP 0 618 429 B1**
(45) Date de publication et mention de la délivrance du brevet: **09.07.1997**
(21) Numéro de dépôt: 93400853.3
(22) Date de dépôt: 02.04.1993
(51) Int. Cl.: G01G 13/02

(54) **Procédé et dispositif de dosage, en particulier pour matières conditionnées en poudre**
Verfahren und Vorrichtung zum Dosieren, insbesondere für pulverförmige Stoffe
Method and device for dosing, particularly for powders

(43) Date de publication de la demande: 05.10.1994
(73) Titulaire: COMPAGNIE GENERALE DES ETABLISSEMENTS MICHELIN - MICHELIN & CIE, 63040 Clermont-Ferrand Cédex (FR)
(72) Inventeur: Dartus,Yves, F-63100 Clermont-Ferrand (FR)
(74) Mandataire: Bauvir, Jacques

(56) Documents cités:
- EP-A- 0 095 095
- DE-A- 2 709 304

## Description

La présente invention se rapporte au dosage quantitatif de matières susceptibles de s'écouler naturellement, comme des produits en grains ou des produits pulvérulents. Le dosage de tels produits, que ce soit le dosage volumétrique ou le dosage pondéral, comporte de nombreuses applications industrielles. Dans certains cas, il est hautement souhaitable que le dosage puisse se faire en continu, afin de pouvoir incorporer la matière dosée dans un processus de production en continu.

Si le dosage quantitatif est parfaitement maîtrisé pour des produits en phase liquide, il n'en est pas de même pour des produits se présentant sous forme de poudre. On connaît déjà des systèmes fonctionnant par pesée, comme par exemple le système décrit dans le brevet US 4 320 855. Un tel système comporte un réservoir contenant la matière à doser, dont le poids total est en permanence évalué. Un flux de matière est extrait en continu hors de ce réservoir et la connaissance de l'évolution à la baisse du poids total permet de réguler le débit de matière prélevé dans ce réservoir.

Malheureusement, un tel système est insuffisamment précis. En effet, la balance utilisée doit être capable de mesurer le poids total de matière contenue dans le réservoir. Par ailleurs, il est souhaitable de pouvoir mesurer de façon précise les quantités instantanées de matières prélevées dans le réservoir. Or, les quantités de matières prélevées par unité de temps représentent typiquement un très faible pourcentage de la masse totale de matière qu'est susceptible de contenir le réservoir. On sait que, en métrologie, il n'est en général pas possible d'obtenir une précision de l'ordre du pourcent sur une déviation qui n'est elle-même qu'un très faible pourcentage de la gamme de mesure d'un appareil.

Il est donc bien difficile de réaliser un dosage très précis de matière sur la base d'un procédé tel que décrit dans le brevet US 4 320 855 précité. En outre, on peut faire observer qu'une grande précision sera d'autant plus difficile à atteindre dans un procédé continu que le débit est très faible : puisque l'on souhaite un débit continu, le flux sera découpé en quantités élémentaires aussi faibles que possible ; en fonctionnement dynamique, il est problématique d'obtenir une précision inférieure à quelques pourcents sur une quantité de quelques milligrammes toutes les secondes.

On connaît également les dispositifs de dosage fonctionnant selon un principe de mesure de volume. Or, la plupart du temps, le dosage qu'il faut effectuer est en réalité un dosage pondéral, parce qu'on mélange des masses de matières bien déterminées pour réaliser un produit de composition donnée. Dès lors, le dosage volumétrique n'est qu'une approche indirecte du dosage pondéral qu'il faut effectivement réaliser. En conséquence, il est souvent nécessaire d'effectuer un conditionnement préalable de la matière à doser afin d'avoir une densité de matière rigoureusement constante en amont du système de dosage volumétrique.

Le but de la présente invention est de proposer un procédé et un dispositif de dosage de très grande précision, qui puissent fonctionner avec des quantités élémentaires dosées extrêmement faibles, des débits moyens très faibles, et qui puissent fonctionner à débit nominal variable.

Selon l'invention, le procédé de dosage consiste à répéter continuellement le cycle suivant :
a) introduire une quantité élémentaire de matière dans une trémie de pesage,
b) relever le poids de la quantité élémentaire, pour caractériser une pesée,
c) évacuer la quantité de matière contenue dans la trémie de pesage au bout d'un délai proportionnel au poids d'une pesée, et fonction du débit souhaité.

Ainsi, on voit que l'invention propose de partir d'une quantité élémentaire qui peut être assez grossièrement estimée, puis de mesurer avec grande précision ladite quantité élémentaire, et de reconstituer un flux continu en moyenne en libérant lesdites quantités élémentaires successives selon une séquence qui dépend des mesures réellement observées.

Un dispositif de dosage permettant de mettre en oeuvre ce procédé comprend :
- un réservoir contenant la matière à doser,
- un extracteur pour retirer de façon contrôlée de la matière à doser hors du réservoir,
- une trémie intermédiaire, recueillant la matière qui y est introduite par l'extracteur,
- une trémie de pesage, recueillant la matière qui y est introduite lorsque l'on ouvre la trémie intermédiaire pour la vider,
- des moyens de pesée délivrant le poids de la matière contenue dans la trémie de pesée lorsque la trémie intermédiaire est refermée,
- des moyens permettant de déclencher la cascade d'opérations suivante : ouvrir la trémie de pesée pour la vider, puis la refermer après un retard donné, puis ouvrir la trémie intermédiaire pour en transférer le contenu dans la trémie de pesée, puis la refermer après un autre retard donné,
- des moyens permettant de régler le délai s'écoulant entre une cascade donnée et la suivante, à partir des mesures issues des moyens de pesée, en fonction du débit pondéral nominal souhaité.

L'invention propose d'appliquer une technique de dosage pondéral, pour tirer avantage de la plus grande précision intrinsèque de cette technique. Contrairement à ce qui est connu dans un système de dosage pondéral susceptible de fonctionner en continu, la présente invention requiert d'utiliser une balance dont la gamme de fonctionnement correspond sensiblement à la quantité élémentaire dosée. L'invention permet donc de profiter pleinement de la grande précision que l'on peut obtenir pour les balances pesant des masses faibles. Afin d'obtenir un fonctionnement aussi continu que possible, il est important que le temps de cycle soit très faible. Dans ce cas là, de préférence, on utilise un type de balance dont le temps de stabilisation, suite à un chargement, est extrêmement court. On trouve dans le commerce des balances capables de peser quelques grammes avec un temps de pesée inférieur à une seconde, le temps de pesée comprenant le temps de stabilisation de la balance préalable à l'acquisition de la mesure.

Le principe général de l'invention consiste donc à discrétiser le flux nominal de matière qu'il faut fournir en quantités élémentaires successives que l'on appelle "pesées". Grâce au principe de régulation des périodes de temps séparant deux pesées successives, ou plus précisément deux vidanges successives de la trémie de pesée, on peut obtenir une très grande précision du débit global délivré par le système de dosage. Cette très grande précision peut sans difficulté être obtenue même si le système d'alimentation en continu de la trémie de pesage est lui très peu précis. Le temps entre l'évacuation d'une pesée et celui de la pesée précédente est proportionnel au poids de la dernière pesée ou, en variante, proportionnel au poids mémorisé lors de la pesée effectuée à l'un des cycles précédant le cycle en cours. Ledit temps est par exemple proportionnel au poids de la pesée précédente, comme c'est le cas dans l'exemple commenté en détail ci-dessous.

L'invention est illustrée au moyen des quatre figures suivantes qui représentent :
- la figure 1, une perspective générale d'un dispositif de dosage selon l'invention ;
- la figure 2, une vue en élévation plus détaillée du même dispositif ;
- la figure 3, une vue détaillée de l'un des organes du dispositif de dosage ;
- la figure 4, un chronogramme des évacuations des pesées successives.

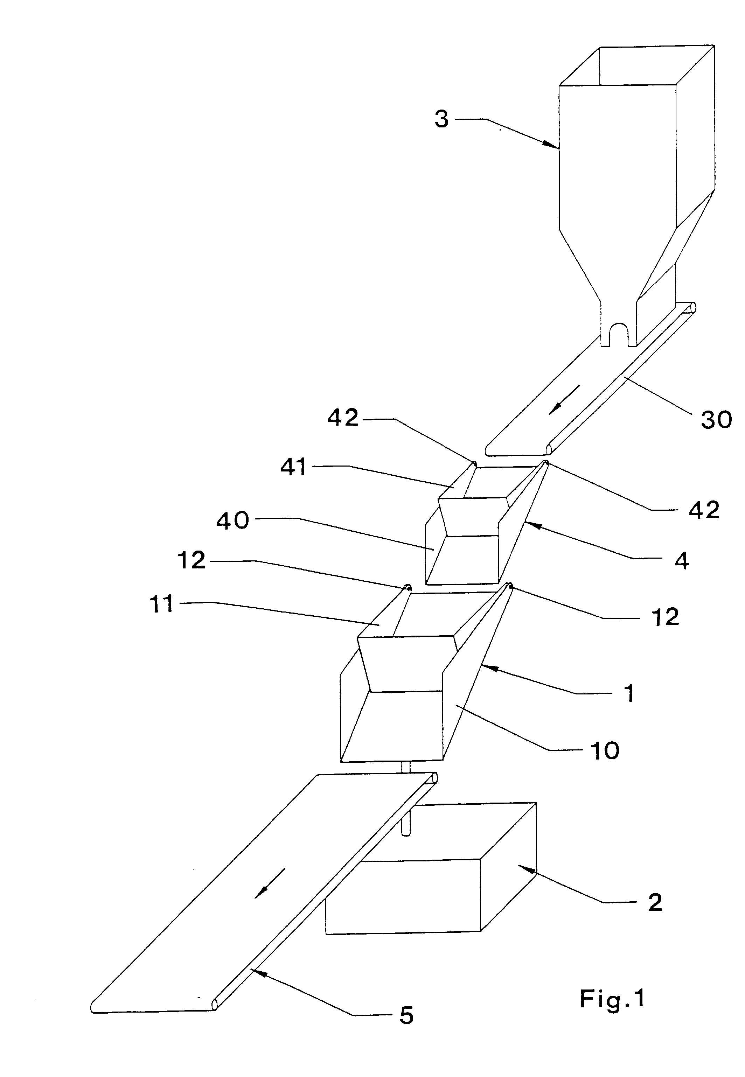

La vue schématique de la figure 1 permet d'avoir un aperçu global permettant de bien comprendre le principe de l'invention. Le coeur de l'installation de dosage est constitué par la trémie de pesée 1 et par une balance rapide 2. La trémie de pesée comporte une paroi fixe 10 et une paroi mobile 11, articulée autour de l'axe 12. La matière à doser est stockée dans un réservoir 3.

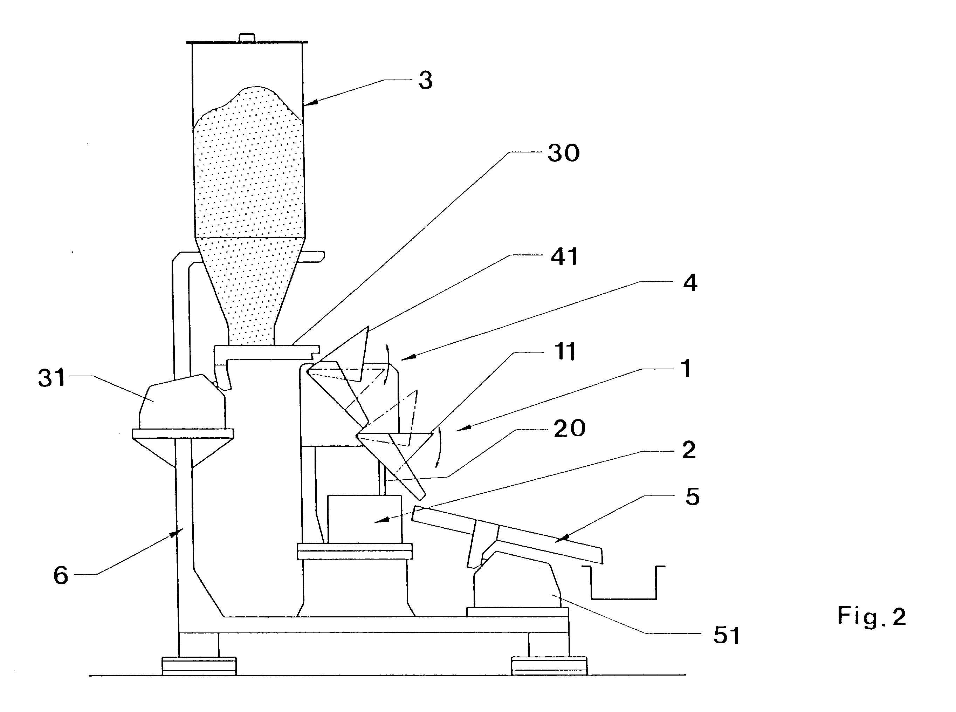

Un extracteur 30 permet d'amener de la matière dans la trémie intermédiaire 4, constituée à l'image de la trémie de pesée 1 par une paroi fixe 40 formant un plan incliné bordé de rebords, sur lequel la matière peut glisser, et par une paroi mobile 41, articulée autour de l'axe 42, capable d'arrêter la matière lorsqu'elle glisse sur le plan incliné constitué par la paroi fixe 40. Enfin, le dispositif comporte un organe d'évacuation comme un tapis vibrant 5 (figure 1) ou une rampe inclinée vibrante 5' (figure 2).

L'ouverture de chacune des trémies 1 ou 4 est obtenue en basculant suffisamment sa paroi mobile 11 ou 41. A la figure 2, on a représenté en traits continus la trémie intermédiaire 4 ouverte, et la trémie de pesée 1 fermée, et en vue fantôme la trémie intermédiaire 4 fermée et la trémie de pesée ouverte. Sur cette même figure 2, on voit aussi l'unité de commande 31 de l'extracteur 30, l'unité de commande 51 de l'organe d'évacuation 5, ainsi qu'une structure 6 de support des différents organes du dispositif doseur.

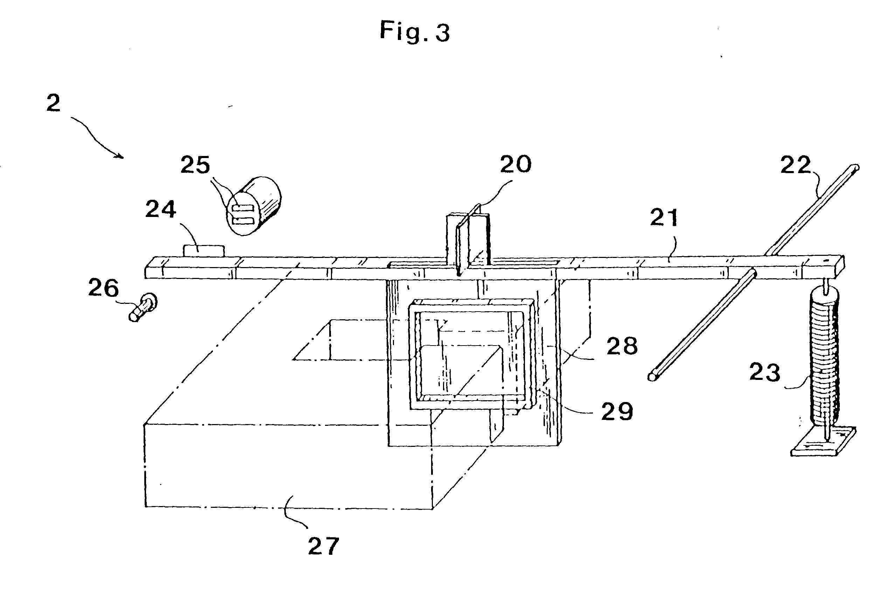

La figure 3 illustre la construction de la balance 2 à stabilisation rapide. Une tige 20 est reliée d'une part à la paroi fixe 10 de la trémie de pesée 1 et d'autre part au fléau 21 de la balance. Au zéro de la balance, la tige 20 est orientée verticalement afin de reporter le poids sur le fléau sans composante orientée dans la direction du fléau 21.

Le fléau 21 porte un bobinage 29 monté sur une plaque 28. Le fléau peut tourner autour d'un axe 22 et son poids mort ainsi que la tare de la trémie de pesée 1 est compensé par un ressort de tarage 23. Un bobinage 29 est situé dans l'entrefer d'un aimant permanent 27. Un détecteur de zéro est constitué par une plaque 24 solidaire du fléau 21, d'une lampe 26 et de deux photodiodes 25 montées en pont. Au zéro, l'éclairage est nul sur les deux photodiodes 25 et le pont est en équilibre. Quand une charge dans la trémie de pesée 1 tend à faire descendre le fléau, le petit mouvement en résultant est détecté par une augmentation d'éclairage qu'il produit sur l'une des deux photodiodes 25, et la différence de résistance existant alors entre les deux photodiodes crée une tension aux bornes du pont. Cette tension agit sur un amplitificateur opérationnel, qui envoie du courant dans le bobinage 29 pour ramener le fléau 21 au zéro, et le pont à l'équilibre. La force électromagnétique compense alors exactement la charge dans la trémie de pesage 1. Après étalonnage, la mesure du courant envoyé dans le bobinage 29 est une mesure du poids de matière contenue dans la trémie de pesage 1.

On peut envisager différentes variantes du procédé de dosage décrit ci-dessus. L'introduction de matière dans la trémie de pesage peut se faire par prélèvement de doses successives grossièrement mesurées. De préférence, on régule la quantité de matière de chaque dose en fonction du poids moyen des précédentes pesées, ou en fonction du délai s'écoulant entre deux évacuations successives d'une pesée, et en fonction du débit théorique souhaité.

A ce procédé discontinu, on peut préférer un procédé dans lequel on prélève en continu de la matière hors d'un réservoir de stockage, on transfère ce flux, pendant un temps donné, vers la trémie de pesée, puis on dérive ce flux continu de matière pour le réintroduire dans le réservoir, pendant le temps nécessaire pour relever le poids de matière déjà introduite dans la trémie de pesée, ensuite on évacue la quantité de matière présente dans la trémie de pesée, et, aussitôt que la trémie de pesée est vidée de son contenu, on transfère à nouveau le flux de matière un bref moment pour laisser de la matière parvenir à nouveau dans la trémie de pesée, et ainsi de suite. Dans ce cas, de préférence, le flux prélevé en continu est régulé en fonction du poids moyen des précédentes pesées ou du délai s'écoulant entre deux évacuations successives d'une pesée, et en fonction du débit théorique souhaité.

Dans la suite, on décrit plus en détail un dispositif de dosage dans lequel on procède à l'extraction de doses successives hors du réservoir 3, doses que l'on introduit les unes après les autres dans la trémie intermédiaire 4. L'extracteur volumétrique 30 transfère à chaque cycle un volume grossièrement contrôlé dans la trémie intermédiaire 4, supposée fermée au départ. Sur un ordre de l'unité centrale qui pilote le système de dosage, la trémie intermédiaire 4 s'ouvre, ce qui libère la matière retenue provisoirement par ladite trémie intermédiaire 4.

A ce stade, aucun dosage précis n'a été effectué. Le système décrit a pour seul rôle de discrétiser un flux qui théoriquement devrait être continu en quantités élémentaires successives. Chacune de ces quantités peut comporter une masse qui fluctue dans des proportions très importantes, par exemple + ou - 20 %.

Dès que la trémie intermédiaire 4 est fermée, après un retard juste suffisant pour permettre à la colonne de chute de la matière présente entre la trémie intermédiaire 4 et la trémie de pesée 1 d'avoir disparu, et qui permet à la balance 2 de se stabiliser, celle-ci effectue un relevé du poids de matière accumulée dans la trémie de pesée 1.

Ensuite, l'unité centrale de pilotage du dispositif de dosage déclenche ladite cascade d'opérations (ouvrir la trémie de pesée, la refermer, ouvrir la trémie intermédiaire, la refermer). Le délai s'écoulant entre deux cascades est calculé à partir du poids de matière relevé lors de la pesée précédant celle effectuée juste avant de déclencher une cascade d'opérations, ou pourrait être calculé à partir d'une des pesées précédentes.

De préférence, la quantité de matière retirée par l'extracteur volumétrique 30 est elle-même régulée en fonction d'un nombre choisi de dernières pesées, ou d'un nombre choisi de derniers délais, et en comparant ces valeurs à des valeurs moyennes souhaitées.

Le débit nominal de l'installation de dosage, qui s'exprime en masse par unité de temps, est un paramètre de fonctionnement de cette installation. A partir d'un débit nominal imposé, et d'une mesure de poids, il est possible de calculer le temps pendant lequel on doit libérer une quantité de poids connue pour obtenir un débit théorique constant. Le dispositif de dosage ainsi construit libère chaque quantité de masse connue au bout d'un temps qui est fonction, non pas de cette masse, mais de la masse de la quantité précédemment libérée.

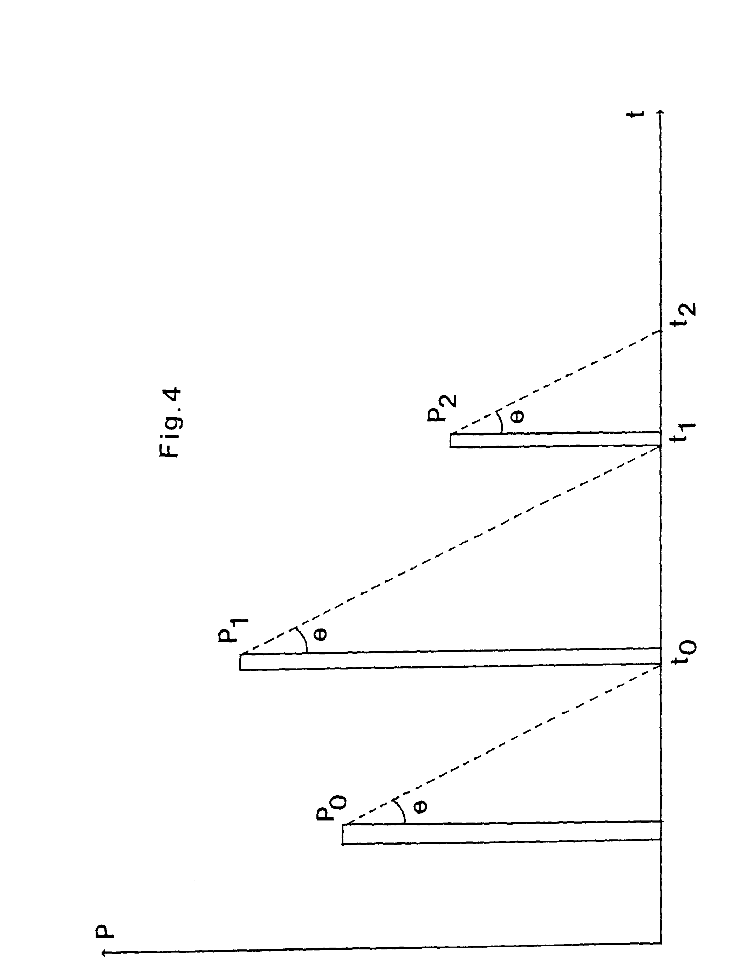

En consultant la figure 4, on voit que si Pₒ représente le poids de la première pesée et P₁, le poids de la seconde pesée, celle-ci est lâchée au bout d'un délai tₒ qui est fonction du poids de la pesée précédente Pₒ. Ainsi de suite, si P₂ représente le poids de la troisième pesée, celle-ci est lâchée au bout d'un délai t₁ qui est fonction de la pesée P₁ précédente. Les droites tracés en pointillés entre le sommet de chaque pesée et la base de la pesée suivante sont de pente constante. On reconstruit bien de cette façon un débit (poids/temps) qui est globalement continu et constant. Toutefois, ce débit est pulsé puisqu'il est constitué de quantités élémentaires réparties dans le temps.

On peut très facilement lisser le débit de sortie du système de dosage ainsi réalisé en utilisant par exemple en aval de la trémie de pesée une rampe vibrante 5' ou un tapis vibrant 5, qui va permettre à chaque pesée de se répartir le long de la rampe jusqu'à rejoindre la pesée précédente pour reconstituer un flux de matière sensiblement continu.

L'invention peut trouver une application très intéressante dans la préparation en continu des mélanges de caoutchoucs qui sont utilisés dans l'industrie du pneumatique. Elle peut être utilisée notamment pour réaliser le dosage en continu de la plupart des produits chimiques utilisés comme additifs aux élastomères de base puisque la plupart de ceux-ci peuvent très facilement être réduits en poudre ou en granulés. Elle peut également être utilisée pour réaliser le dosage en continu des élastomères eux-mêmes lorsqu'ils ont été préalablement déchiquetés. Les plages de débit utilisées peuvent varier d'une centaine de grammes par heure à plusieurs centaines de kilos par heure.

## Revendications

1. Dispositif de dosage comprenant :
- un réservoir (3) contenant la matière à doser,
- un extracteur (30) pour retirer de façon contrôlée de la matière à doser hors du réservoir (3),
caractérisé en ce qu'il comprend :
- une trémie intermédiaire (4) recueillant la matière qui y est introduite par l'extracteur (30),
- une trémie de pesage (1) recueillant la matière qui y est introduite lorsque l'on ouvre la trémie intermédiaire (4) pour la vider,
- des moyens (2) de pesée délivrant le poids de la matière contenue dans la trémie de pesée (1) lorsque les deux trémies sont fermées,
- des moyens permettant de déclencher la cascade d'opérations suivante : ouvrir la trémie de pesée (1) pour la vider, puis la refermer après un retard donné, puis ouvrir la trémie intermédiaire (4) pour en transférer le contenu dans la trémie de pesée (1), puis la refermer après un autre retard donné,
- des moyens permettant de régler le délai s'écoulant entre une cascade donnée et la suivante à partir des mesures issues des moyens de pesée, en fonction du débit pondéral nominal souhaité.

2. Dispositif de dosage selon la revendication 1, caractérisé en ce qu'il comporte en outre des moyens d'évacuation de la série de pesées successives capables d'effectuer un lissage desdites pesées successives provenant de la trémie de pesée, et permettant de délivrer un débit de matière sensiblement continu en sortie.

3. Dispositif selon la revendication 2, caractérisé en ce que les moyens de lissage sont constitués par un tapis vibrant (5) ou une rampe inclinée vibrante (5').

4. Dispositif selon l'une des revendications 1 à 3,
caractérisé en ce que ledit extracteur (30) est un extracteur volumétrique.

5. Dispositif selon la revendication 4, caractérisé en ce que ledit extracteur (30) volumétrique extrait la matière par doses successives introduites les unes après les autres dans la trémie intermédiaire (4).

6. Dispositif selon l'une des revendications 1 à 5,
caractérisé en ce que la quantité de matière retirée par l'extracteur (30) est calculée en fonction d'un nombre choisi de dernières pesées, ou d'un nombre choisi de derniers délais, et en comparant ces valeurs à des valeurs moyennes souhaitées.

7. Dispositif selon l'une des revendications 1 à 6,
caractérisé en ce que le délai s'écoulant entre deux cascades est calculé à partir du poids de matière relevé lors d'une des pesées précédant celle effectuée juste avant de déclencher une cascade d'opérations.

8. Procédé de dosage consistant à répéter continuellement le cycle suivant :
a) introduire une quantité élémentaire de matière dans une trémie de pesage,
b) relever le poids de la quantité élémentaire pour caractériser une pesée,
c) évacuer la quantité de matière contenue dans la trémie de pesage au bout d'un délai proportionnel au poids mémorisé lors d'une pesée effectuée à l'un des cycles précédant le cycle en cours et fonction du débit souhaité.

9. Procédé de dosage selon la revendication 8, caractérisé en ce que l'on introduit une quantité élémentaire de matière dans ladite trémie de pesage par prélèvement d'une dose.

10. Procédé selon la revendication 9, caractérisé en ce que l'on régule la quantité de matière de chaque dose en fonction du poids moyen des précédentes pesées ou du délai s'écoulant entre deux évacuations successives d'une pesée, et en fonction du débit théorique souhaité.

11. Procédé de dosage selon la revendication 8, caractérisé en ce que, pour introduire une quantité élémentaire de matière dans ladite trémie de pesage, on prélève en flux continu de la matière hors d'un réservoir de stockage, on transfère ce flux pendant un temps donné vers la trémie de pesée, puis on dérive ce flux continu de matière pour le réintroduire dans le réservoir, pendant le temps nécessaire pour relever le poids puis évacuer la quantité de matière déjà introduite dans la trémie de pesée, et, aussitôt que la trémie de pesée est vidée de son contenu, on transfère à nouveau le flux de matière un bref moment pour laisser de la matière parvenir à nouveau dans la trémie de pesée.

12. Procédé de dosage selon la revendication 11, caractérisé en ce que le flux prélevé en continu est régulé en fonction du poids moyen des précédentes pesées ou du délai s'écoulant entre deux évacuations successives d'une pesée, et en fonction du débit théorique souhaité.

## Patentansprüche

1. Dosiervorrichtung mit den folgenden Merkmalen:
- ein Vorratsbehälter (3), der den zu dosierenden Stoff enthält,
- eine Entnahmeeinrichtung (30) zum Entnehmen des zu dosierenden Stoffes in gesteuerter Weise aus dem Vorratsbehälter (3),
dadurch gekennzeichnet, daß sie die folgenden Merkmale aufweist:
- eine Zwischenschütte (4), die den Stoff aufnimmt, der dorthin durch die Entnahmeeinrichtung (30) eingebracht wurde,
- eine Wiegeschütte (1), die den Stoff aufnimmt, der dorthin eingebracht wird, wenn man die Zwischenschütte (4) zu ihrer Entleerung öffnet,
- Wiegemittel (2), die das Gewicht des Stoffes abgeben, der in der Wiegeschütte (1) enthalten ist, wenn die beiden Schütten geschlossen sind,
- Mittel, die es gestatten, den folgenden Ablauf von Vorgängen auszulösen: Öffnen der Wiegeschütte (1) zu ihrer Entleerung, dann ihr erneutes Verschließen nach einer gegebenen Verzögerung, dann Öffnen der Zwischenschütte (4) zum Überbringen ihres Inhaltes in die Wiegeschütte (1), und dann ihre erneute Schließung nach einer anderen, gegebenen Verzögerung, und
- Mittel, die es gestatten, die Verzögerung zu regulieren, die zwischen einem erfolgten Ablauf und dem folgenden verstreicht, ausgehend von Messungen, die von den Wiegemitteln abgegeben wurden, in Funktion des gewünschten, gewichtsbezogenen Nenndurchsatzes.

2. Dosiervorrichtung nach Anspruch 1, dadurch gekennzeichnet, daß sie außerdem Mittel zum Entleeren der Reihe aufeinanderfolgender Wiegemengen aufweist, die imstande sind, eine Glättung der genannten, aufeinanderfolgenden Wiegemengen vorzunehmen, die aus der Wiegeschütte herkommen, und es gestatten, einen im wesentlichen kontinuierlichen Stoffduchsatz im Ausgang abzugeben.

3. Vorrichtung nach Anspruch 2, dadurch gekennzeichnet, daß die Glättungsmittel von einer schwingenden Matte (5) oder einer geneigten, schwingenden Rampe (5') gebildet sind.

4. Vorrichtung nach einem der Ansprüche 1 bis 3, dadurch gekennzeichnet, daß die genannte Entnahmeeinrichtung (30) eine volumetrische Entnahmeeinrichtung ist.

5. Vorrichtung nach Anspruch 4, dadurch gekennzeichnet, daß die genannte volumetrische Entnahmeeinrichtung (30) den Stoff in aufeinanderfolgenden Dosen abzieht, die in die Zwischenschütte (4) aufeinanderfolgend eingebracht werden.

6. Vorrichtung nach einem der Ansprüche 1 bis 5, dadurch gekennzeichnet, daß die von der Entnahmeeinrichtung (30) abgezogene Stoffmenge als Funktion einer aus den letzten Wägungen ausgewählten Zahl oder einer aus den letzten Verzögerungen ausgewählten Zahl errechnet wird, und durch einen Vergleich dieser Werte mit den angestrebten Mittelwerten.

7. Vorrichtung nach einem der Ansprüche 1 bis 6, dadurch gekennzeichnet, daß die Verzögerung, die zwischen zwei aufeinanderfolgenden Abläufen verstreicht, vom Stoffgewicht ausgehend berechnet wird, das während eines der Wiegevorgänge gemessen wurde, der dem vorausgeht, der unmittelbar vor dem Auslösen eines Ablaufes von Vorgängen bewirkt wurde.

8. Dosierverfahren, das darin besteht, kontinuierlich den folgenden Zyklus zu wiederholen:
a) Einbringen einer Elementar-Stoffmenge in eine Wiegeschütte,
b) Messen des Gewichtes der Elementarmenge zum Kennzeichnen einer Wägung, und
c) Entleeren der Stoffmenge, die in der Wiegeschütte enthalten ist, am Ende einer Verzögerung, die proportional ist zum Gewicht, das während einer Wägung gespeichert wurde, die in einem der Zyklen bewirkt wurde, der dem laufenden Zyklus vorangeht, und die eine Funktion des angestrebten Durchsatzes ist.

9. Dosierverfahren nach Anspruch 8, dadurch gekennzeichnet, daß man eine Elementar-Stoffmenge in die genannte Wiegeschütte durch Entnahme einer Dosis einbringt.

10. Dosierverfahren nach Anspruch 9, dadurch gekennzeichnet, daß man die Stoffmenge einer jeden Dosis in Funktion des mittleren Gewichts der vorangehenden Wägungen oder der Verzögerung einreguliert, die zwischen zwei aufeinanderfolgenden Entleerungen einer Wägung verstreicht, und in Funktion des angestrebten, theoretischen Durchsatzes.

11. Dosierverfahren nach Anspruch 8, dadurch gekennzeichnet, daß man zum Einbringen einer Elementar-Stoffmenge in die genannte Wiegeschütte Stoff in kontinuierlichem Fluß aus einem Vorratsbehälter entnimmt, diesen Fluß während einer vorgegebenen Zeit zur Wiegeschütte hin überführt, dann diesen kontinuierlichen Stoff-Fluß ableitet, um ihn wieder in den Vorratsbehälter während der Zeit einzubringen, die notwendig ist, um das Gewicht zu messen und dann die Stoffmenge zu entleeren, die schon in die Wiegeschütte eingebracht ist, und daß man, sobald die Wiegeschütte von ihrem Inhalt entleert ist, von neuem den Stoff-Fluß einen kurzen Augenblick überführt, um den Stoff erneut in die Wiegeschütte gelangen zu lassen.

12. Dosierverfahren nach Anspruch 11, dadurch gekennzeichnet, daß der kontinuierlich entnommene Fluß in Funktion des mittleren Gewichts der vorangehenden Wägungen oder der Verzögerung einreguliert wird, die zwischen zwei aufeinanderfolgenden Entleerungen einer Wägung verstreicht, und in Funktion des theoretischen, angestrebten Durchsatzes.

## Claims

1. A metering device comprising:
- a reservoir (3) containing the material to be metered,
- an extractor (30) for withdrawing the material to be metered from the reservoir (3) in a controlled manner,
characterised in that it comprises:
- an intermediate hopper (4) receiving the material which is introduced therein by the extractor (30),
- a weighing hopper (1) receiving the material which is introduced therein when the intermediate hopper (4) is opened in order to empty it,
- weighing means (2) giving the weight of the material contained in the weighing hopper (1) when the two hoppers are closed,
- means for triggering the following sequence of operations: opening the weighing hopper (1) in order to empty it, then closing it after a given delay, then opening the intermediate hopper (4) in order to transfer the contents thereof into the weighing hopper (1), then closing it after another given delay,
- means for adjusting the time interval elapsing between a given sequence and the following sequence on the basis of the measurements from the weighing means, as a function of the desired nominal weight output.

2. A metering device according to claim 1, characterised in that it moreover comprises means for removing the series of successive weighings, these means being capable of effecting smoothing of said successive weighings coming from the weighing hopper, and making it possible to deliver a substantially continuous output of material.

3. A device according to claim 2, characterised in that the smoothing means are formed by a vibrating belt (5) or an inclined vibrating ramp (5').

4. A device according to one of claims 1 to 3, characterised in that said extractor (30) is a volumetric extractor.

5. A device according to claim 4, characterised in that said volumetric extractor (30) extracts the material in successive batches introduced one after the other into the intermediate hopper (4).

6. A device according to one of claims 1 to 5, characterised in that the quantity of material withdrawn by the extractor (30) is determined as a function of a chosen number of preceding weighings, or a chosen number of preceding time intervals, and by comparing these values to desired mean values.

7. A device according to one of claims 1 to 6, characterised in that the time interval elapsing between two sequences is calculated from the weight of material recorded during one of the weighings preceding that carried out just before triggering a sequence of operations.

8. A metering method consisting of continuously repeating the following cycle:
a) introducing a unit quantity of material into a weighing hopper,
b) recording the weight of the unit quantity in order to characterise a weighing,
c) removing the quantity of material contained in the weighing hopper at the end of a time interval proportional to the weight stored in memory during a weighing effected in one of the cycles preceding the current cycle, and as a function of the desired output.

9. A metering method according to claim 8, characterised in that a unit quantity of material is introduced into said weighing hopper by withdrawing one batch.

10. A method according to claim 9, characterised in that the quantity of material in each batch is regulated as a function of the mean weight of the preceding weighings or of the time interval elapsing between two successive removals of a weighing, and as a function of the desired theoretical output.

11. A metering method according to claim 8,
characterised in that, in order to introduce a unit quantity of material into said weighing hopper, material is withdrawn in a continuous flow from a storage reservoir, this flow is transferred during a given time towards the weighing hopper, then this continuous flow of material is branched off in order to reintroduce it into the reservoir, during the time necessary to record the weight, then emptying the quantity of material already introduced into the weighing hopper, and, as soon as the weighing hopper has been emptied of its contents, the flow of material is transferred again briefly in order to allow the material to enter again into the weighing hopper.

12. A metering method according to claim 11,
characterised in that the continuously withdrawn flow is regulated as a function of the mean weight of the preceding weighings or of the time interval elapsing between two successive removals of a weighing, and as a function of the desired theoretical output.
